# FASCICULE DE BREVET EUROPEEN

(11) **EP 2 313 251 B1**
(45) Date de publication et mention de la délivrance du brevet: **01.05.2013**
(21) Numéro de dépôt: 09769539.9
(22) Date de dépôt: 26.06.2009
(51) Int. Cl.: B29C 49/48, B29C 49/42, B29C 33/38, B29C 49/56, B29C 33/30

(54) **MOULE, INSTALLATION DE SOUFFLAGE ET PROCÉDÉ DE FABRICATION D'UN MOULE**
FORM FÜR EINE BLASFORMMASCHINE, BLASFORMMASCHINE UND VERFAHREN ZUR HERSTELLUNG EINER SOLCHEN FORM
MOULD FOR A BLOW-MOULDING MACHINE, BLOW-MOULDING MACHINE AND METHOD OF MANUFACTURING SUCH A MOULD

(30) Priorité: 27.06.2008 FR 0803610; 07.05.2009 FR 0953064
(43) Date de publication de la demande: 27.04.2011
(73) Titulaire: Sidel Participations, 76930 Octeville sur Mer (FR)
(72) Inventeur: LANGLOIS, Jean-Christophe, F-76930 Octeville-sur-mer (FR)
(74) Mandataire: Cabinet Plasseraud
(86) Numéro de dépôt international: PCT/FR2009/051231
(87) Numéro de publication internationale: WO 2009/156698

(56) Documents cités:
- EP-A1- 1 514 667
- DE-U1-202004 011 785
- US-A- 5 332 384
- US-A1- 2007 059 396

## Description

La présente invention concerne le domaine du moulage de récipients, notamment de bouteilles, en matière thermoplastique, tel que PET (polyéthylène téraphtalate) par soufflage ou étirage-soufflage de préformes chauffées.

Plus précisément, l'invention se rapporte à un moule d'une installation de soufflage de récipients ainsi qu'au procédé de fabrication du moule, et à l'installation de soufflage comportant un tel moule.

Selon une configuration, un moule d'une telle installation de soufflage comprend deux demi-moules pour former l'épaule et le corps des récipients, et un fond de moule pour former le fond des récipients. Les deux demi-moules sont articulés l'un par rapport à l'autre autour d'un axe. Ils sont déplacés l'un par rapport à l'autre entre une position de fermeture du moule et de soufflage, et une position d'ouverture du moule au cours de laquelle le récipient façonné est retiré. Le fond de moule est déplacé verticalement entre la position de fermeture et d'ouverture du moule.

Des pièces de centrage et de verrouillage sont fixées sur les demi-moules et sur le fond pour assurer le centrage et la formation précise de la cavité de moulage, et éviter les bavures dues au plan de joint.

Selon une autre configuration le document US 5,332,384 divulgue un système d'alignement de moules pour soufflage comportant quatre pions de centrage fixés à un demi-moule et quatre orifices de centrage aménagés sur un autre demi-moule.

Toutefois, ces pièces de centrage et de verrouillage doivent être régulièrement lubrifiées. Ces opérations de maintenance nécessitent l'arrêt de l'installation de soufflage et plus généralement l'arrêt de l'ensemble de la chaîne de fabrication des récipients.

Ces arrêts diminuent les cadences de production et augmentent le coût de fabrication des récipients. De plus, ces opérations de maintenance sont réalisées dans des conditions relativement difficiles pour les opérateurs en raison, notamment, de la température ambiante qui règne autour de l' installation.

En outre, ces opérations de lubrification souillent parfois les moules.

Par ailleurs, le document EP 1 514667 divulgue un appareil de soufflage pour former un container creux, Cet appareil comporte une paire de demi-moules et une portion de moule centrale contenant un dispositif d'injection de gaz. La surface supérieure de le portion de moule centrale est imprégnée ou recouverte d'un matériau ayant un faible coefficient de friction pour aider i'éjection du container creux sans craquer les parois du fond.

L'invention a notamment pour but de supprimer ces opérations de maintenance.

A cet effet, l'invention a pour objet un moule pour installation de soufflage de récipients en matière thermoplastique, le moule comportant plusieurs parties de moule comprenant un relief de centrage, et un relief de centrage de forme complémentaire ; ledit relief de centrage et ledit relief de centrage de forme complémentaire étant aptes à coopérer l'un avec l'autre,
au moins une partie de l'un au moins des relief de centrage et relief de centrage de forme complémentaire comprenant un matériau composite anti-frottement pour éviter sa lubrification.

Suivant des modes particuliers de réalisation, le moule comporte l'une ou plusieurs des caractéristiques suivantes :
- le moule comporte trois parties de moule, dont au moins deux parties de moule comprennent un relief de centrage, et un relief de centrage de forme complémentaire ;
- le moule comporte trois parties de moule munies chacune d'un relief parmi un relief de centrage ou un relief de centrage de forme complémentaire ;
- le moule comporte uniquement deux parties de moule comprenant l'une, un relief de centrage, et l'autre un relief de centrage de forme complémentaire ;
- au moins un relief parmi le relief de centrage et le relief de centrage de forme complémentaire est fixé à une partie de moule ; ledit relief fixé étant réalisé en matériau composite anti-frottement ;
- le matériau composite anti-frottement comprend une matière plastique, et au moins un relief parmi le relief de centrage et le relief de centrage de forme complémentaire est fixé à une partie de moule ; ledit relief fixé étant réalisé par moulage par injection plastique ;
- le matériau composite anti-frottement comprend une ossature appelée renfort qui assure la tenue mécanique ;
- le matériau composite anti-frottement comprend une protection appelée matrice;
- le matériau composite anti-frottement est un revêtement de surface ; le matériau composite anti-frottement comprend polyétherimide ;
- le matériau composite anti-frottement comprend des composés lubrifiants ;
- les composés lubrifiants comprennent du polytétrafluoréthylène ;
- les composés lubrifiants comprennent du polyphénylène sulfide.

L'invention a également pour objet un procédé de fabrication d'un moule destiné à une installation de soufflage de récipients en matière thermoplastique ; le moule comportant au moins deux parties de moule comprenant respectivement un relief de centrage, et un relief de centrage de forme complémentaire ; ledit relief de centrage et ledit relief de centrage de forme complémentaire étant aptes à coopérer l'un avec l'autre,
ledit procédé comportant les étapes suivantes :
- usinage de au moins deux parties de moule, au moins une partie de moule comprenant au moins une face de réception ;
- moulage par injection d'au moins un relief parmi un relief de centrage et un relief de centrage de forme complémentaire dans un matériau composite anti-frottement ; et
- fixation du relief moulé à la face de réception de la ou de chaque partie de moule.

En variante, le procédé de fabrication d'un moule destiné à une installation de soufflage de récipients en matière thermoplastique, comporte une étape d'usinage d'au moins deux parties de moule comprenant respectivement un relief de centrage et un relief de centrage de forme complémentaire ; ledit relief de centrage et ledit relief de centrage de forme complémentaire étant aptes à coopérer l'un avec l'autre,
ledit procédé comportant une étape d'application d'un revêtement composite anti-frottement sur au moins une partie de l'un au moins des relief de centrage et relief de centrage de forme complémentaire pour éviter la lubrification du moule.

Enfin, l'invention a pour objet une installation de soufflage de récipients, notamment de bouteilles, en matière thermoplastique, caractérisée en ce que l'installation comporte au moins un moule tel que mentionné ci-dessus.

L'invention sera mieux comprise à la lecture de la description qui va suivre, donnée uniquement à titre d'exemple et faite en se référant aux dessins, sur lesquels :
- La figure 1 est une vue partiellement en coupe du moule selon l'invention ;
- La figure 2 est une vue en perspective d'un moule en trois parties comprenant deux demi-moules et d'un fond ; et
- La figure 3 est une vue en perspective d'un moule en deux parties comprenant deux demi-moules ;
- La figure 4 est une vue en perspective d'une bague d'usure et de positionnement et d'une portion d'anneau d'usure et de centrage du moule selon l'invention.

Dans la suite de la description, les termes « supérieur » et « inférieur » sont définis par rapport à la position usuelle d'un moule dans une installation de soufflage. Ces termes ne doivent pas être interprétés comme limitant la portée de la présente invention à une quelconque orientation du moule.

De façon connue, une installation de soufflage comprend un bâti portant un carrousel propre à être entraîné en rotation autour d'un axe central.

Le carrousel supporte plusieurs unités de moulage. Chaque unité de moulage comprend une console 8, un moule 10 et un ou plusieurs actionneurs pour manoeuvrer les différentes parties de ce moule.

D'autres installations de soufflage, telles que par exemple une installation par moulage linéaire (système de presse), peuvent être utilisées.

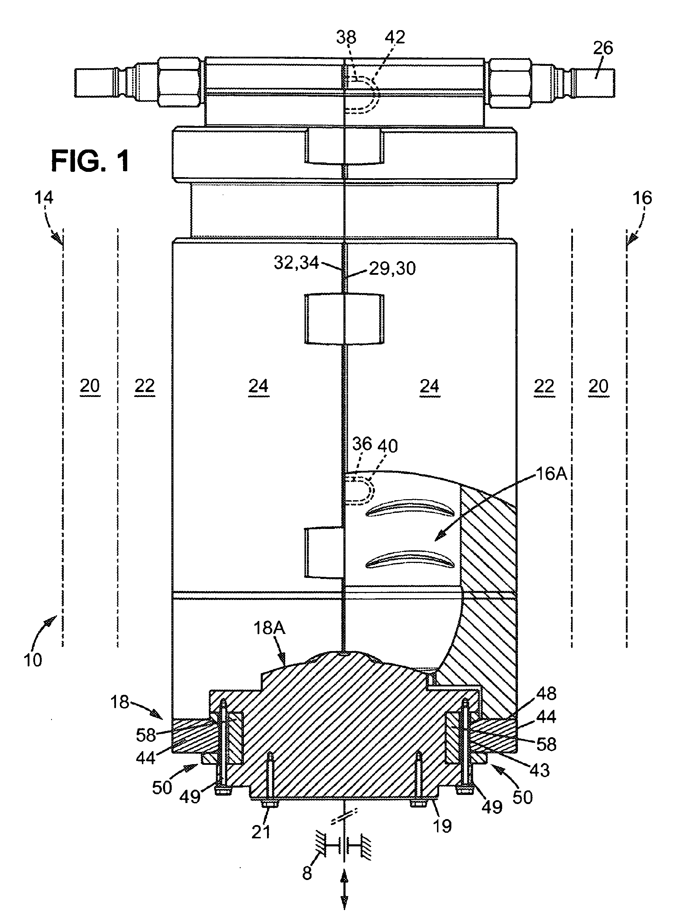

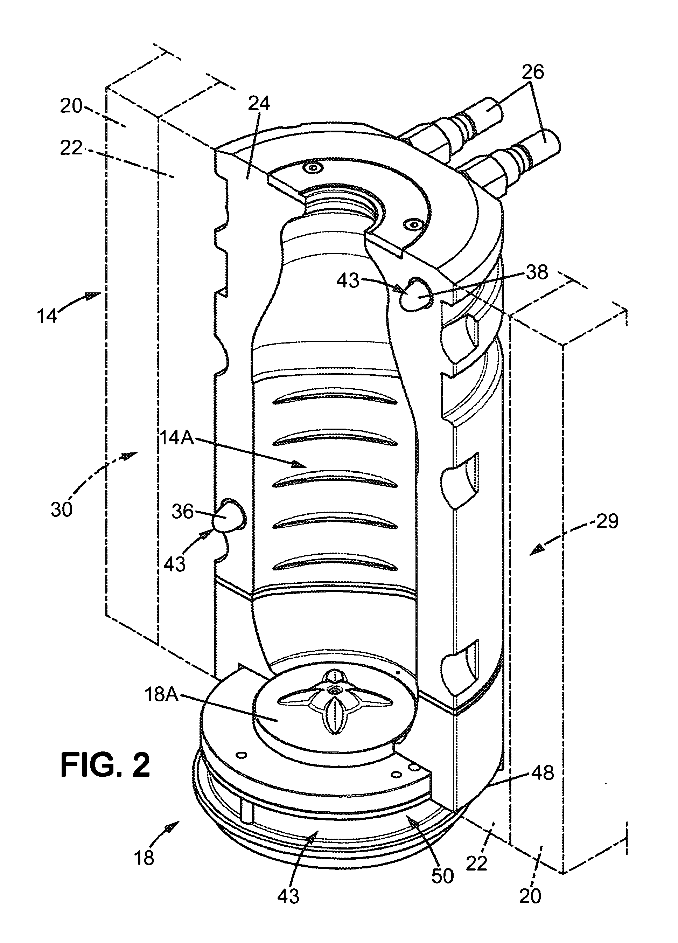

Selon une autre configuration de l'invention représentée sur les figures 1 et 2, le moule 10 comprend une première 14 et une seconde 16 demi-faces de moule, ci-après appelées demi-moules, dans lesquelles est creusé une empreinte 14A, 16A pour former l'épaule et le corps des récipients, et un fond 18 de moule dans lequel est creusé une empreinte 18A pour former le fond des récipients.

Dans l'exemple illustré, les deux demi-moules 14, 16 sont articulés l'un par rapport à l'autre autour d'un axe non représenté. Ce type de moule est généralement appelé moule portefeuille. Une première unité d'entraînement, non représentée, et apte à déplacer les demi-moules 14, 16 entre une position de fermeture du moule dans laquelle les demi-moules sont accolés, et une position d'ouverture du moule dans laquelle les demi-moules sont éloignés l'un de l'autre pour permettre le retrait du récipient façonné.

Le fond 18 est porté par un support 19 qui est mobile verticalement par rapport à la console 8. Le fond 18 et le support 19 sont assemblés ensemble par des vis 21.

Une seconde unité d'entraînement, non représentée, est propre à déplacer le support 19 entre la position de fermeture du moule 10 dans laquelle le fond 18 coopère avec les demi-moules 14, 16, et une position d'ouverture dans laquelle le fond 18 est déplacé dans une position éloignée des demi-moules 14, 16.

Chaque demi-moule 14, 16 est optionnellement équipé de deux raccords 26 pour réaliser la thermorégulation des préformes qui sont dans le moule 10.

En référence aux figures 1 et 2, chaque demi-moule 14, 16 présente une forme sensiblement semi-cylindrique. En particulier, chaque demi-moule 14, 16 comprend un support 20, un porte-coquille 22 emboîté et fixé sur le support 20, et une coquille 24 emboîtée et fixée dans le porte-coquille 22. Les empreintes 14A et 16A sont creusées dans la face interne des coquilles 24. Elles forment avec l'empreinte 18A du fond, une cavité 28 de moulage, lorsque les demi-moules 14, 16 et ledit fond 18 sont accolés.

Le demi-moule 14 possède des faces coopérantes ou faces 29, 30 d'appui, qui, en position de fermeture du moule, sont en appui mutuel sur les faces 32, 34 d'appui du demi-moule 16.

Les faces 29, 30 d'appui du demi-moule 14 sont munies de reliefs de centrage destinés à venir coopérer avec des reliefs de centrage de forme complémentaire de l'autre demi-moule 16. Les reliefs de centrage et les reliefs de centrage complémentaires peuvent être aménagés sur les supports 20, sur les porte-coquilles 22, ou sur les coquilles 24.

Dans l'exemple illustré, les reliefs 36, 38 de centrage sont constitués par des pions 36, 38 de centrage et les reliefs de centrage de forme complémentaire sont formés par des logements 40, 42 de forme et de profondeur correspondant à celles desdits pions de centrage.

Les pions 36, 38 et les logements 40, 42 sont propres à assurer un calage et un positionnement correct d'un demi-moule 14 par rapport à l'autre demi-moule 16. Les pions 36, 38 ou les logements 40, 42, comprennent un matériau 43 composite anti-frottement pour éviter la lubrification de ceux-ci.

Ainsi, aucune lubrification n'est réalisée sur les pions 36, 38 ou les logements 40, 42 après plus de 10.000.000 cycles de soufflage, et plus, ou après deux ans de production.

Selon un premier mode de réalisation de l'invention, le matériau 43 composite anti-frottement comprend une matière plastique appelée matrice.

Dans ce cas, les pions 36, 38 et/ou les logements 40, 42 sont réalisés par moulage par injection d'insert en forme de pion ou de douille. Puis, ils sont ajustés en force dans des trous percés dans le demi-moule 14 et/ou le demi-moule 16.

En variante, les pions 36, 38 et les logements 40, 42 sont vissés dans des taraudages des demi-moules 14, 16.

En particulier, le matériau 43 composite anti-frottement comprend du polyétherimide PEI et de préférence du polyétherimide chargé en composés lubrifiants tels que du polytétrafluoréthylène.

Le polyétherimide est également chargé en fibres de verre ou fibres de carbone pour augmenter sa rigidité, par exemple à 40 %.

En particulier, le matériau 43 composite anti-frottement comprend du polyphénylène sulfide PPS.

Selon un second mode de réalisation de l'invention, la pièce 43 est revêtue d'un traitement anti-frottement tel que le DLC (de l'anglais « Diamond Like Carbon »).

Le revêtement DLC est alors appliqué sur les inserts formant les pions 36, 38 et/ou sur les inserts formant les logements 40, 42 qui sont, dans ce cas, usinés dans de l'acier.

En variante, le revêtement DLC est directement déposé dans le logement formé dans le demi-moule 16.

Ce type de revêtement est notamment décrit dans les documents suivants : US 6,303,226 ; US 5,250,322 et US 5,470,661.

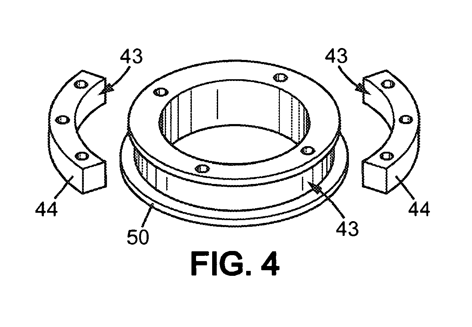

Comme visible sur les figures 1 et 4, une portion ou un segment 44 d'anneau d'usure est fixée sur la face inférieure 48 de chaque demi-moule 14, 16. Cette portion 44 d'anneau d'usure est destinée à venir coopérer avec une bague 50 d'usure aménagée autour du fond 18 pour assurer le centrage et le verrouillage du fond 18 sur les demi-moules 14, 16 lors de l'opération de fermeture du moule 10.

A cet effet, une gorge 58 est formée sur le pourtour du fond 18. Cette gorge 58 est apte à réceptionner la bague 50 d'usure. Le fond 18 et la bague 50 d'usure sont assemblés ensemble par des vis 49.

La bague 50 d'usure ou les portions 44 d'anneau d'usure comprennent le matériau 43 composite anti-frottement pour éviter leur lubrification.

Comme décrit précédemment, ce matériau 43 composite anti-frottement est, selon le premier mode de réalisation de l'invention, un matériau comprenant du polyetherimide ou selon le second mode de réalisation de l'invention, un revêtement DLC ou autre traitement de surface ou matériau auto lubrifié.

En variante du second mode de réalisation de l'invention, seule une partie de la bague 50 d'usure et une partie des portions 44 d'anneau d'usure comprennent le matériau 43 composite anti-frottement. Ces parties sont alors les parties de la bague d'usure et de la portion d'anneau d'usure en contact mutuel l'une avec l'autre.

Selon un autre mode de réalisation de l'invention, seule la bague 50 d'usure ou les portions 44 d'anneau d'usure comprennent le matériau 43 composite anti-frottement. Les pions 36, 38 et les logements 40, 42 sont alors lubrifiés de façon classique. Dans ce cas, le demi-moule 14 (ou 16) et le fond 18 forment une première partie de moule au sens de l'invention. Le demi-moule 16 (ou 14) forme, à lui tout seul, la deuxième partie de moule au sens de l'invention. La bague d'usure 50 constitue le relief de centrage de la première partie 14, 18 de moule. La portion 44 d'anneau d'usure constitue le relief de centrage de forme complémentaire de la deuxième partie 16 du moule.

Selon un dernier mode de réalisation de l'invention, seuls les pions 36, 38 et/ou les logements 40, 42 comprennent le matériau 43 composite anti-frottement. La bague 50 d'usure et les portions 44 d'anneau d'usure sont alors lubrifiées de façon classique. Dans ce cas, le demi-moule 14 forme la première partie de moule au sens de l'invention. Le demi-moule 16 forme la deuxième partie de moule au sens de l'invention. Les pions 36, 38 constituent les reliefs de centrage de la première partie de moule 14. Les logements 40, 42 constituent les reliefs de centrage de forme complémentaires de la deuxième partie 16 du moule.

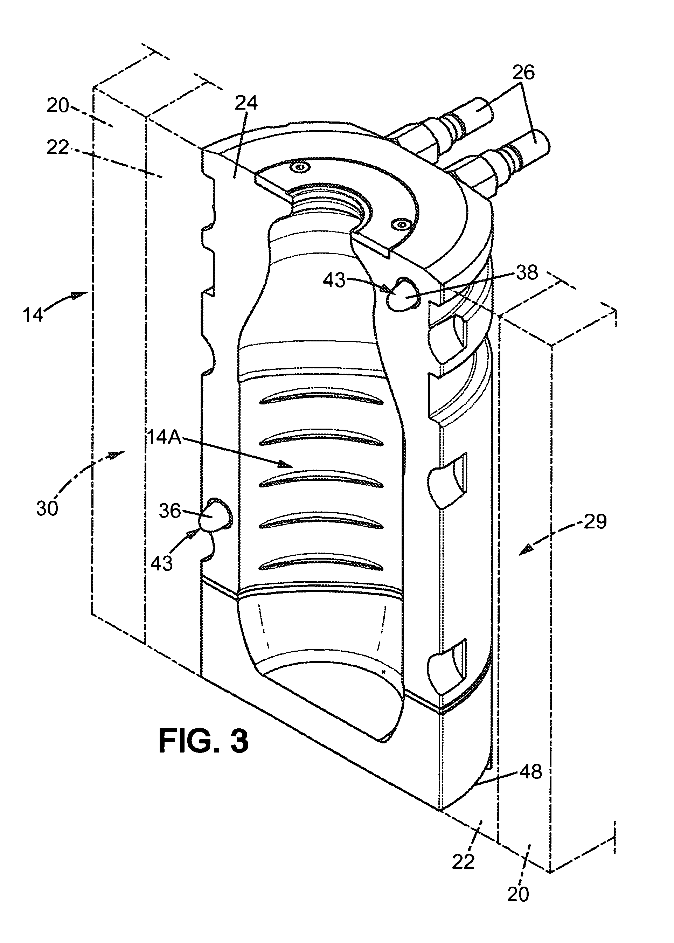

Selon une configuration possible de l'invention, représentée sur la figure 3, le moule comprend uniquement deux demi-moules pourvus chacun d'une empreinte propre à former l'ensemble de l'épaule, du corps et du fond des récipients.

Selon cette configuration, les faces 29, 30 d'appui du demi-moule 14 sont munies de reliefs de centrage destinés à venir coopérer avec des reliefs de centrage de forme complémentaire de l'autre demi-moule 16. Les reliefs de centrage et les reliefs de centrage complémentaires peuvent être aménagés sur les supports 20, sur les porte-coquilles 22, ou sur les coquilles 24. Dans ce cas, les demi-moules 14, 16 ne comprennent pas de segment d'anneau d'usure 44.

L'invention concerne également un procédé de fabrication du moule 10 tel que mentionné ci-dessus. Le procédé comporte les étapes suivantes :
- usinage de deux parties de moule, au moins une partie de moule comprenant au moins une face de réception;
- moulage par injection d'au moins un relief parmi un relief 36, 38, 50 de centrage et un relief 40, 42, 44 de centrage de forme complémentaire dans un matériau 43 composite anti-frottement ; et
- fixation du relief moulé à la face de réception de la partie de moule.

En variante, le procédé comporte les étapes suivantes :
- usinage des deux demi-moules 14, 16 et du fond 18 ;
- usinage de l'un au moins parmi les pions 36, 38, les logements 40, 42, la bague 50 d'usure et les portions 44 d'anneau d'usure,
- application d'un revêtement 43 composite anti-frottement sur au moins une partie d'un relief parmi les pions 36, 38, les logements 40, 42, la bague 50 d'usure et les portions 44 d'anneau d'usure.

## Revendications

1. Moule (10) pour installation de soufflage de récipients en matière thermoplastique, le moule (10) comportant plusieurs parties de moule comprenant un relief (36, 38, 50) de centrage et un relief (40, 42, 44) de centrage de forme complémentaire ; lesdits reliefs (36, 38, 50) de centrage et relief (40, 42, 44) de centrage de forme complémentaire étant aptes à coopérer l'un avec l'autre,
**caractérisé en ce qu'**au moins une partie de l'un au moins des relief (36, 38, 50) de centrage et relief (40, 42, 44) de centrage de forme complémentaire comprend un matériau (43) composite anti-frottement pour éviter sa lubrification.

2. Moule (10) selon la revendication 1, qui comporte uniquement deux parties de moule comprenant l'une, un relief (36, 38, 50) de centrage, et l'autre un relief (40, 42, 44) de centrage de forme complémentaire.

3. Moule (10) selon la revendication 1, qui comporte trois parties de moule, dont au moins deux parties de moule comprennent un relief (36, 38, 50) de centrage, et un relief (40, 42, 44) de centrage de forme complémentaire.

4. Moule (10) selon la revendication 1, qui comporte trois parties de moule munies chacune d'un relief parmi un relief (36, 38, 50) de centrage ou un relief (40, 42, 44) de centrage de forme complémentaire.

5. Moule (10) selon l'une quelconque des revendications 1 à 4, dans lequel au moins un relief parmi le relief (36, 38, 50) de centrage et le relief (40, 42, 44) de centrage de forme complémentaire est fixé à une partie de moule ; ledit relief fixé étant réalisé en matériau (43) composite anti-frottement.

6. Moule (10) selon l'une quelconque des revendications 1 à 5, dans lequel le matériau (43) composite anti-frottement comprend une matière plastique, et dans lequel au moins un relief parmi le relief (36, 38, 50) de centrage et le relief (40, 42, 44) de centrage de forme complémentaire est fixé à une partie de moule ; ledit relief fixé étant réalisé par moulage par injection plastique.

7. Moule (10) selon l'une quelconque des revendications 1 à 6, dans lequel le matériau (43) composite anti-frottement comprend du polyétherimide.

8. Moule selon l'une quelconque des revendications 1 à 7, dans lequel le matériau (43) composite anti-frottement comprend des composés lubrifiants.

9. Moule (10) selon la revendication 8, dans lequel les composés lubrifiants comprennent du polytétrafluoréthylène.

10. Moule (10) selon la revendication 8, dans lequel les composés lubrifiants comprennent du polyphénylène sulfide.

11. Moule (10) selon la revendication 1, dans lequel le matériau (43) composite anti-frottement est un revêtement de surface.

12. Moule (10) selon la revendication 11, dans lequel le revêtement de surface est un revêtement DLC.

13. Installation de soufflage ou étirage-soufflage de récipients, notamment de bouteille, en matière thermoplastique, **caractérisée en ce que** l'installation comporte au moins un moule selon l'une quelconque des revendications 1 à 12.

14. Procédé de fabrication d'un moule (10) selon l'une quelconque des revendications 1 à 10, ledit moule (10) étant destiné à une installation de soufflage de récipients en matière thermoplastique ; le moule (10) comportant au moins deux parties de moule comprenant respectivement un relief (36, 38, 50) de centrage, et un relief (40, 42, 44) de centrage de forme complémentaire ; ledit relief (36, 38, 50) de centrage et ledit relief (40, 42, 44) de centrage de forme complémentaire étant aptes à coopérer l'un avec l'autre ; **caractérisé en ce que** le procédé comporte les étapes suivantes :
- usinage d'au moins deux parties de moule, au moins une partie de moule comprenant au moins une face de réception ;
- moulage par injection d'au moins un relief parmi un relief (36, 38, 50) de centrage et un relief (40, 42, 44) de centrage de forme complémentaire dans un matériau (43) composite anti-frottement ; et
- fixation du relief moulé à la face de réception de la ou de chaque partie de moule.

15. Procédé de fabrication d'un moule (10) selon l'une quelconque des revendications 1 5, 11 et 12, ledit moule (10) étant destiné à une installation de soufflage de récipients en matière thermoplastique ; le procédé comportant une étape d'usinage de au moins deux parties de moule comprenant respectivement un relief (36, 38, 50) de centrage, et un relief (40, 42, 44) de centrage de forme complémentaire ; ledit relief (36, 38, 50) de centrage et ledit relief (40, 42, 44) de centrage de forme complémentaire étant aptes à coopérer l'un avec l'autre ;
**caractérisé en ce que** le procédé comporte une étape d'application d'un revêtement (43) composite anti-frottement sur au moins une partie de l'un au moins des relief (36, 38, 50) de centrage et relief (40, 42, 44) de centrage de forme complémentaire pour éviter la lubrification du moule.

## Claims

1. A mold (10) for a machine for blow molding containers made of thermoplastic, the mold (10) comprising a plurality of mold parts comprising a centering relief (36, 38, 50) and a centering relief (40, 42, 44) of complementary shape; said centering relief (36, 38, 50) and centering relief (40, 42, 44) of complementary shape being able to collaborate with one another,
**characterized in that** at least part of at least one of the centering relief (36, 38, 50) and centering relief (40, 42, 44) of complimentary shape comprises a composite antifriction material (43) in order to avoid the need to lubricate it.

2. The mold (10) as claimed in claim 1, which comprises only two mold parts, one of them comprising a centering relief (36, 38, 50) and the other a centering relief (40, 42, 44) of complimentary shape.

3. The mold (10) as claimed in claim 1, which comprises three mold parts, at least two mold parts of which comprise a centering relief (36, 38, 50) and a centering relief (40, 42, 44) of complimentary shape.

4. The mold (10) as claimed in claim 1, which comprises three mold parts each equipped with one relief out of a centering relief (36, 38, 50) or a centering relief (40, 42, 44) of complimentary shape.

5. The mold (10) as claimed in any one of claims 1 to 4, in which at least one relief out of the centering relief (36, 38, 50) and the centering relief (40, 42, 44) of complementary shape is fixed to a mold part; said fixed relief being made of composite antifriction material (43).

6. The mold (10) as claimed in any one of claims 1 to 5, in which the composite antifriction material (43) contains a plastic, and in which at least one relief out of the centering relief (36, 38, 50) and the centering relief (40, 42, 44) of complimentary shape is fixed to a mold part; said fixed relief being produced by plastic injection molding.

7. The mold (10) as claimed in any one of claims 1 to 6, in which the composite antifriction material (43) contains polyétherimide.

8. The mold as claimed in any one of claims 1 to 7, in which the composite antifriction material (43) contains lubricating compounds.

9. The mold (10) as claimed in claim 8, in which the lubricating compounds contain polytetrafluoroethylene.

10. The mold (10) as claimed in claim 8, in which the lubricating compounds contain polyphenylene sulfide.

11. The mold (10) as claimed in claim 1, in which the composite antifriction material (43) is a surface coating.

12. The mold (10) as claimed in claim 11, in which the surface coating is a DLC coating.

13. A machine for blow molding or stretch-blow molding containers, notably bottles, made of thermoplastic, **characterized in that** the machine comprises at least one mold as claimed in any one of claims 1 to 12.

14. A method of manufacturing a mold (10) as claimed in any one of claims 1 to 10, said mold (10) being intended for a machine for blow molding containers made of thermoplastic; the mold (10) comprising at least two mold parts respectively comprising a centering relief (36, 38, 50) and a centering relief (40, 42, 44) of complimentary shape; said centering relief (36, 38, 50) and said centering relief (40, 42, 44) of complimentary shape being able to collaborate with one another; **characterized in that** the method comprises the following steps:
- machining at least two mold parts, at least one mold part comprising at least one receiving face;
- injection molding at least one relief out of a centering relief (36, 38, 50) and a centering relief (40, 42, 44) of complimentary shape in a composite antifriction material (43); and
- fixing the molded relief to the receiving face of the or each mold part.

15. The method of manufacturing a mold (10) as claimed in any one of claims 1 to 5, 11 and 12, said mold (10) being intended for a machine for blow molding containers made of thermoplastic; the method comprising a step of machining at least two mold parts respectively comprising a centering relief (36, 38, 50) and a centering relief (40, 42, 44) of complimentary shape; said centering relief (36, 38, 50) and said centering relief (40, 42, 44) of complimentary shape being able to collaborate with one another;
**characterized in that** the method comprises a step of applying a composite antifriction coating (43) to at least part of at least one out of the centering relief (36, 38, 50) and the centering relief (40, 42, 44) of complimentary shape so as to avoid the need to lubricate the mold.

## Patentansprüche

1. Formwerkzeug (10) für Anlage zum Blasformen von Behältern aus einem Thermoplast, wobei das Formwerkzeug (10) mehrere Formwerkzeugteile aufweist, die ein Zentrierungsrelief (36, 38, 50) und ein Zentrierungsrelief (40, 42, 44) mit komplementärer Form umfasst; wobei das zentrierungsrelief (36, 38, 50) und das Zentrierungsrelief (40, 42, 44) mit komplementärer Form dazu geeignet sind, miteinander zusammenzuwirken,
**dadurch gekennzeichnet, dass** mindestens ein Teil von mindestens einem des Zentrierungsreliefs (36, 38, 50) und des Zentrierungsreliefs (40, 42, 44) mit komplementärer Form ein reibungsarmer Verbundwerkstoff (43) ist, um seine Schmierung zu vermeiden.

2. Formwerkzeug (10) nach Anspruch 1, das lediglich zwei Formwerkzeugteile aufweist, von denen einer ein Zentrierungsrelief (36, 38, 50) und der andere ein Zentrierungsrelief (40, 42, 44) mit komplementärer Form umfasst.

3. Formwerkzeug (10) nach Anspruch 1, das drei Formwerkzeugteile aufweist, von denen mindestens zwei Formwerkzeugteile ein zentrierungsrelief (36, 38, 50) und ein Zentrierungsrelief (40, 42, 44) mit komplementärer Form umfassen.

4. Formwerkzeug (10) nach Anspruch 1, das drei Formwerkzeugteile aufweist, die jeweils mit einem Relief von einem Zentrierungsrelief (36, 38, 50) oder einem Zentrierungsrelief (40, 42, 44) mit komplementärer Form ausgestattet sind.

5. Formwerkzeug (10) nach einem der Ansprüche 1 bis 4, wobei mindestens ein Relief von dem Zentrierungsrelief (36, 38, 50) und dem Zentrierungsrelief (40, 42, 44) mit komplementärer Form an einem Formwerkzeugteil fest angebracht ist; wobei das fest angebrachte Relief aus einem reibungsarmen Verbundwerkstoff (43) hergestellt ist.

6. Formwerkzeug (10) nach einem der Ansprüche 1 bis 5, wobei der reibungsarme Verbundwerkstoff (43) einen Kunststoff umfasst und wobei mindestens ein Relief von dem Zentrierungsrelief (36, 38, 50) und dem Zentrierungsrelief (40, 42, 44) mit komplementärer Form an einem Formwerkzeugteil fest angebracht ist; wobei das fest angebrachte Relief durch Kunststoffspritzgießen hergestellt wird.

7. Formwerkzeug (10) nach einem der Ansprüche 1 bis 6, wobei der reibungsarme Verbundwerkstoff (43) Polyetherimid umfasst.

8. Formwerkzeug (10) nach einem der Ansprüche 1 bis 7, wobei der reibungsarme Verbundwerkstoff (43) Schmiermittelverbindungen umfasst.

9. Formwerkzeug (10) nach Anspruch 8, wobei die Schmiermittelverbindungen Polytetrafluorethylen umfassen.

10. Formwerkzeug (10) nach Anspruch 8, wobei die Schmiermittelverbindungen Polyphenylensulfid umfassen.

11. Formwerkzeug (10) nach Anspruch 1, wobei der reibungsarme Verbundwerkstoff (43) eine Oberflächenbeschichtung ist.

12. Formwerkzeug (10) nach Anspruch 11, wobei die Oberflächenbeschichtung eine DLC-Beschichtung ist.

13. Anlage zum Blasformen oder Ziehen-Blasformen von Behältern, insbesondere einer Flasche, aus einem Thermoplast, **dadurch gekennzeichnet, dass** die Anlage mindestens ein Formwerkzeug nach einem der Ansprüche 1 bis 12 aufweist.

14. Verfahren zur Herstellung eines Formwerkzeugs (10) nach einem der Ansprüche 1 bis 10, wobei das Formwerkzeug (10) für eine Anlage zum Blasformen von Behältern aus einem Thermoplast vorgesehen ist; wobei das Formwerkzeug (10) mindestens zwei Formwerkzeugteile aufweist, die jeweils ein Zentrierungsrelief (36, 38, 50) und ein Zentrierungsrelief (40, 42, 44) mit komplementärer Form umfassen; wobei das zentrierungsrelief (36, 38, 50) und das Zentrierungsrelief (40, 42, 44) mit komplementärer Form dazu geeignet sind, miteinander zusammenzuwirken; **dadurch gekennzeichnet, dass** das Verfahren die folgenden Schritte aufweist:
- maschinelles Fertigen von mindestens zwei Formwerkzeugteilen, wobei mindestens ein Formwerkzeugteil mindestens eine Aufnahmefläche umfasst;
- Spritzgießen mindestens eines Reliefs von einem Zentrierungsrelief (36, 38, 50) und einem Zentrierungsrelief (40, 42, 44) mit komplementärer Form in einem reibungsarmen Verbundwerkstoff (43) und
- festes Anbringen des gegossenen Reliefs an der Aufnahmefläche des oder jedes Formwerkzeugteils.

15. Verfahren zur Herstellung eines Formwerkzeugs (10) nach einem der Ansprüche 1 bis 5, 11 und 12, wobei das Formwerkzeug (10) für eine Anlage zum Blasformen von Behältern aus einem Thermoplast vorgesehen ist; wobei das Verfahren einen Schritt des maschinellen Fertigens von mindestens zwei Formwerkzeugteilen aufweist, die jeweils ein zentrierungsrelief (36, 38, 50) und ein Zentrierungsrelief (40, 42, 44) mit komplementärer Form umfassen; wobei das zentrierungsrelief (36, 38, 50) und das Zentrierungsrelief (40, 42, 44) mit komplementärer Form dazu geeignet sind;
**dadurch gekennzeichnet, dass** das Verfahren einen Schritt des Aufbringens einer reibungsarmen Verbundbeschichtung (43) auf mindestens einen Teil von mindestens einem des Zentrierungsreliefs (36, 38, 50) und des Zentrierungsreliefs (40, 42, 44) mit komplementärer Form aufweist, um die Schmierung des Formwerkzeugs zu vermeiden.
